# EUROPÄISCHE PATENTSCHRIFT

(11) **EP 3 126 810 B1**
(45) Veröffentlichungstag und Bekanntmachung des Hinweises auf die Patenterteilung: **14.02.2018**
(21) Anmeldenummer: 16721789.2
(22) Anmeldetag: 06.05.2016
(51) Int. Cl.: G01M 13/02, F16H 7/02

(54) **RIEMENANTRIEB UND VERFAHREN ZUM ÜBERWACHEN EINES SOLCHEN RIEMENANTRIEBS**
BELT DRIVE AND METHOD FOR MONITORING SUCH A BELT DRIVE
ENTRAÎNEMENT PAR COURROIE ET PROCÉDÉ PERMETTANT DE SURVEILLER LEDIT ENTRAÎNEMENT

(30) Priorität: 07.05.2015 DE 102015107177
(43) Veröffentlichungstag der Anmeldung: 08.02.2017
(73) Patentinhaber: Walther Flender GmbH, 40593 Düsseldorf (DE)
(72) Erfinder: SCHOLZEN, Andreas, 47447 Moers (DE); SCHMIDT, Simon-Martin, 40470 Düsseldorf (DE)
(74) Vertreter: Cohausz & Florack
(86) Internationale Anmeldenummer: PCT/EP2016/060188
(87) Internationale Veröffentlichungsnummer: WO 2016/177883

(56) Entgegenhaltungen:
- EP-A2- 2 028 497
- DE-A1-102006 002 118
- DE-U1-202007 008 043
- KR-A- 20080 079 111
- US-A1- 2005 064 971

## Beschreibung

Die Erfindung betrifft einen Riemenantrieb und ein Verfahren zum Überwachen eines solchen Riemenantriebs, wobei hier insbesondere so genannte Zahn- oder Synchronriemen und ein Verfahren zu deren Überwachung betrachtet werden. KR20080079111 offenbart die Merkmale des Obergriffes der Ansprüche 1 und 6. Riemenantriebe der hier in Rede stehenden Art bestehen jeweils mindestens aus einer Antriebs- oder Umlenkscheibe und einem Riemen, der um die Scheibe gelegt ist und dabei über einen Abschnitt des Scheibenumfangs ("Umschlingungsbogen") die Scheiben berührt.
Handelt es sich bei dem Riemen um einen Flachriemen, so weist die Scheibe an ihrem mit dem Riemen in Kontakt kommenden Umfang in der Regel eine entsprechend flache, unstrukturierte Umfangsfläche auf. Handelt es sich bei dem Riemen dagegen um einen Keilriemen, so ist die Scheibe in der Regel mit einer um ihren Umfang umlaufenden Kerbe versehen, in der der Keilriemen sitzt. Im Fall, dass es sich bei dem Riemen um einen Zahn- oder Synchronriemen handelt, ist die Scheibe an ihrem Umfang mit einer Zahnung versehen, deren Form und Teilung der Form und Teilung der Zahnung des Zahn- oder Synchronriemens entspricht. Beim Umlauf des Zahn- oder Synchronriemens um die Scheibe greifen die Zähne des Zahnriemens in die zwischen den Zähnen der Scheibe vorhandenen Lücken, so dass eine in Drehrichtung der Scheibe wirksame formschlüssige Verbindung von Riemen und Scheibe bewerkstelligt ist.
Die Auslegung von Riemen erfolgt üblicherweise anhand von in Katalogen angegebenen Leistungswerten, welche die Riemenhersteller pauschal, d.h. nicht anwendungsbezogen, veröffentlichen. Die Angaben verschiedener Hersteller zu den von ihnen angebotenen Antriebsriemen sind untereinander nicht vergleichbar, weil nicht ersichtlich ist, auf welcher Basis die Angaben ermittelt wurden. Insbesondere ist nicht bekannt, auf welcher Lebensdauerbasis die Werte festgelegt worden sind. Detaillierte Richtlinien oder Normen dazu, wie miteinander vergleichbare Leistungswerte ermittelt werden können, existieren derzeit nicht. Stattdessen definieren die Hersteller von Antriebsriemen eigene Berechnungs- und Auslegungsmethoden. Infolgedessen sind die von den unterschiedlichen Herstellern angegebenen Eigenschaften und Auswahlkriterien nicht oder allenfalls mit großem Aufwand und erheblicher Unsicherheit miteinander vergleichbar. So erweisen sich Produkte mit scheinbar ähnlichen Eigenschaftsprofilen oft als nicht gegeneinander austauschbar, weil die angegebenen Eigenschaften auf unterschiedlichen Wegen ermittelt worden sind.

Eine grobe Vorgabe zur Berechnung der Anforderungen, die Antriebsriemen erfüllen müssen, findet sich in der Richtlinie VDI 2758. Dort heißt es im Abschnitt 3: "Das Riemengetriebe muss einerseits unter den vorgegebenen Anforderungen bzw. Betriebsbedingungen (Drehzahlen, Momente, Raumbedarf, Überlastungen, Wellenverlagerungen, Temperaturen und andere Umwelteinflüsse) über eine angemessene Zeit sicher funktionieren und sollte andererseits die Umgebung so gering wie möglich belasten (Geräusch, Schwingungen usw.)." Wie diese Anforderungen bei optimaler Nutzung der vom jeweiligen Antriebsriemen mitgebrachten Leistungspotenziale erfüllt werden können, bleibt dabei offen.

Um sicherzustellen, dass ein Antriebsriemen trotz vieler Unsicherheiten und Einflussgrößen, die bei der konventionellen Art und Weise der Auslegung von Riemen unberücksichtigt bleiben, die an ihn gestellten Anforderungen erfüllt, werden die in der Praxis anhand der erwarteten Belastungen ermittelten Leistungsanforderungen mit Sicherheitsaufschlägen beaufschlagt. Diese sind so hoch, dass sämtliche Unwägbarkeiten der Auslegung abgedeckt werden.

Nachteilig dabei ist, dass der jeweils ausgewählte Riemen zwar die an ihn gestellten mechanischen Anforderungen sicher erfüllen würde. Jedoch muss dafür eine zum Teil beträchtliche Überdimensionierung in Kauf genommen werden. Hierdurch entsteht die Gefahr, dass für bestimmte Anwendungsfälle optimierte Lösungen übersehen oder nicht gefunden werden. So können die standardmäßig vorgesehenen Sicherheitsaufschläge so hohe Anforderungen an die mechanischen Eigenschaften des zu verwendenden Riemens ergeben, dass diese Anforderungen nur durch einen Riemen erfüllt werden können, dessen andere Materialeigenschaften, beispielsweise seine Flexibilität, außerhalb des Bereichs liegen, in dem sie liegen müssten, um die bei der vorgesehenen Anwendung ergebenden Anforderungen auch hinsichtlich dieser Eigenschaft zu erfüllen.

Ebenso ist es mit den in der Praxis üblichen Methoden nur schwer möglich, einen Riemenantrieb im Hinblick auf seine erwartete Lebensdauer auszulegen. Erfahrungswerte oder Ergebnisse von gezielten Tests werden bei dieser konventionellen Art und Weise der Auslegung nicht berücksichtigt.

Aus der DE 10 2009 003 732 A1 ist ein insbesondere als Antriebsriemen gedachter flexibler Riemen bekannt, der zur Erfassung von Betriebszuständen mit mindestens einem Sensor und einer eigenen internen Stromversorgung für den Sensor ausgestattet ist. Die Stromversorgung ist durch mindestens ein flexibles Piezoelement gebildet, durch das bei zeitlicher Änderung des Biegeradius des Riemens, also immer dann, wenn der mit dem Piezoelement besetzte Riemenabschnitt um eine der Riemenscheiben eines Riemenantriebs umläuft, elektrische Energieportionen erzeugt werden. Das Piezoelement ist über ebenfalls im Riemen angeordnete elektrische Verbindungselemente mit dem Sensor verbunden, der wiederum mit einem im Riemen angeordneten Datenspeicher verkoppelt sein kann, um die vom Sensor erfassten Messergebnisse aufzuzeichnen. Des Weiteren können im Riemen auch ein Gleichrichter und ein elektrischer Energiespeicher angeordnet sein, um die von dem Piezoelement gelieferten Energieportionen über den Gleichrichter im Energiespeicher zu laden. Auf diese Weise kann der Energiespeicher den Sensor und den Datenspeicher kontinuierlich mit Energie versorgen.

Vor dem Hintergrund des voranstehend erläuterten Standes der Technik hat sich die Aufgabe ergeben, einen Riemenantrieb und ein Verfahren zu seiner Überwachung zu nennen, mit denen es auf einfache Weise möglich ist, Messergebnisse zu erzielen, die einen Rückschluss auf die Belastungen ermöglichen, denen der Riemen über seine zurückliegende Einsatzdauer ausgesetzt ist, so dass beispielsweise eine Prognose für die noch verbleibende Lebensdauer des Riemens erstellt werden kann.

In Bezug auf das Verfahren hat die Erfindung diese Aufgabe dadurch gelöst, dass bei der Überwachung eines Riemenantriebs mindestens die in Anspruch 1 angegebenen Arbeitsschritte durchlaufen werden.

In Bezug auf den Riemenantrieb hat die Erfindung die voranstehend genannte Aufgabe dadurch gelöst, dass ein solcher Riemenantrieb in der in Anspruch 6 angegebenen Weise ausgebildet ist.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Verfahren zum Überwachen eines Riemenantriebs, der eine rotierbar gelagerte Scheibe und einen Riemen umfasst, der an der Scheibe umgelenkt ist, wobei der Riemen und die Scheibe jeweils mit einer Markierung ausgestattet und Riemen und Scheibe zueinander so positioniert sind, dass sich beim Umlauf des Riemens um die Scheibe die Markierungen (K1,K2) von Scheibe und Riemen in einer Auslösestellung direkt gegenüber stehen, umfasst somit folgende Arbeitsschritte:
a) Erfassen der Auslösestellung mittels einer Überwachungseinrichtung, wobei die Überwachungseinrichtung ein Signal abgibt, wenn sich die Markierungen in der Auslösestellung befinden;
b) Erfassen der Anzahl der über einen bestimmten zurückliegenden Zeitraum ausgelösten Signale;
   und
c) Ermitteln der Belastungen, denen der Riemen oder die Scheibe während des zurückliegenden Zeitraums ausgesetzt gewesen ist, auf Grundlage der Anzahl der ausgelösten, der Anzahl der Umläufe des Riemens entsprechenden Signale, und unter Berücksichtigung von relevanten Einflussgrößen.

Ein erfindungsgemäßer Riemenantrieb, der eine rotierbar gelagerte Scheibe, einen an der Scheibe umgelenkten Riemen und eine Überwachungseinrichtung umfasst, ist in entsprechender Weise dadurch gekennzeichnet, dass an dem Riemen und an der Scheibe jeweils eine Markierung angebracht ist und dass die Überwachungseinrichtung ein Signal auslöst, wenn die Markierungen von Scheibe und Riemen sich an der Scheibe direkt gegenüber stehen.

Die Erfindung schlägt somit vor, die Scheibe und den Riemen so auszurüsten und mit einer Überwachungseinrichtung zu verkoppeln, dass der Lauf von Scheibe und Riemen überwacht werden kann und auf Grundlage des Ergebnisses dieser Überwachung exakte Kenntnisse über die Anzahl der Umläufe erhalten werden, die der Riemen im Laufe seiner Einsatzdauer absolviert hat.

Zu diesem Zweck sind bei einem erfindungsgemäßen Riemenantrieb der Riemen und die Scheibe jeweils mit einer Markierung ausgestattet, wobei der Riemen und die Scheibe zueinander derart positioniert sind, dass sich bei einer bestimmten Betriebsstellung des Riemenantriebs die Markierungen von Riemen und Scheibe an der Scheibe direkt gegenüberstehen ("Auslösestellung"). Gleichzeitig ist bei einem erfindungsgemäßen Antrieb eine Überwachungseinrichtung vorgesehen, die ein Signal abgibt, wenn die Markierungen sich in der Auslösestellung befinden.

Dieses Signal der Überwachungseinrichtung zeigt im Fall, dass die Anzahl der Zähne des Riemens ein ganzzahliges Vielfaches der Zähne der Scheibe ist, an, dass der Riemen einen vollständigen Umlauf absolviert hat. Im Fall, dass die Anzahl der Zähne des Riemens kein ganzzahliges Vielfaches der Zähnezahl der Scheibe bildet, zeigt das Signal an, dass der Riemen eine Anzahl von vollständigen Umläufen absolviert hat, die durch das Verhältnis von Zähnezahl des Riemens zur Zähnezahl der Scheibe definiert ist.

Mittels eines mit der Überwachungseinrichtung verkoppelten Zählers kann die Anzahl der vom Riemen insgesamt absolvierten Umläufe festgehalten werden. Der Zähler kann dabei Teil einer Auswerteinrichtung sein, die die Anzahl der von der Überwachungseinrichtung ausgelösten Signale erfasst und basierend auf dieser Information und unter Berücksichtigung weiterer Einflussgrößen die Belastungen ermittelt, denen der Riemen oder die Scheibe während ihres zurückliegenden Einsatzes ausgesetzt gewesen sind.

Als Markierung für die erfindungsgemäßen Zwecke sind grundsätzlich alle Kennzeichen geeignet, die sich an Riemen und Scheibe befestigen lassen und anhand derer sich feststellen lässt, ob die Markierungen die Auslösestellung erreicht haben. In Frage kommen dazu beispielsweise optisch, magnetisch, elektrisch oder in jeder anderen Weise physikalisch erfassbare Kennzeichen.

Indem erfindungsgemäß mindestens erfasst wird, wie oft die Markierungen von Riemen und Scheibe sich in der Auslösestellung begegnen, d.h. wie viele Umläufe der Riemen durchlaufen hat, lassen sich unter Berücksichtigung der jeweils relevanten Einflussgrößen, wie Materialeigenschaften von Riemen und Scheibe, Geometrie von Riemen und Scheibe, Reibverhältnisse, Temperaturen, Umgebungsatmosphäre etc. exakte Aussagen über die Belastungen machen, denen der Riemen über seine jeweils zurückliegende Einsatzdauer ausgesetzt gewesen ist. Indem beispielsweise die Leistungsaufnahme des Antriebsmotors, bei einem Elektromotor beispielsweise durch Erfassung der Stromaufnahme, erfasst wird, kann unter Berücksichtigung der jeweils eintretenden Verluste auf die vom Riemen übertragene Leistung geschlossen werden. Aus den jeweils gewonnenen Kenntnissen kann dann mittels einer geeigneten Auswerteinrichtung auf die noch verbleibende Lebensdauer des Riemens oder der Scheibe geschlossen werden. Diese Information erlaubt es wiederum, gezielte Wartungen und erforderlichenfalls einen Austausch der jeweils das Ende ihrer Lebensdauer erreicht habenden Elemente eines erfindungsgemäßen Riemenantriebs vorzunehmen.

Das erfindungsgemäße Verfahren erlaubt es, anhand der erfassten Anzahl von Signalen oder anhand der ermittelten Belastungen von Riemen oder Scheibe einen Sollwertvergleich durchzuführen. Hierzu können die im Arbeitsschritt b) erfasste Anzahl von Signalen oder die in Arbeitsschritt c) ermittelten Belastungen mit einem Sollwert verglichen werden. Im Fall, dass die erfasste Anzahl der Signale oder die ermittelte Belastung von dem jeweiligen Sollwert abweicht, kann dann ein Hinweis auf die Notwendigkeit eines Wartungseingriffs oder eines Nothalts ausgelöst werden.

Die erfindungsgemäße Überwachung liefert in dieser Weise eine Information über Ungleichmäßigkeiten und Abweichungen des Riemenantriebs von seiner Sollfunktion. So können bei Antrieben mit Zahn- oder Synchronriemen beispielsweise auch Übersprünge erfasst werden, die einen sofortigen Wartungseingriff erforderlich machen. Genauso kann bei Flach- oder Keilriemenantrieben Schlupf erkannt werden, so dass entsprechende Gegenmaßnahmen rechtzeitig initiiert werden können. Die Überwachung liefert zudem einen sofortigen Hinweis auf Riemenbruch, der, wenn er erfasst ist, beispielsweise ein "Notaus-Signal" auslösen kann.

Ein weiterer wesentlicher Aspekt der Erfindung ist, dass durch die erfindungsgemäß vorgenommene Überwachung Kenntnisse über das Langzeitverhalten von Riemenantrieben unter den unterschiedlichsten Bedingungen erzielt werden. Diese Kenntnisse können als Basis für eine anwendungsbezogene Auswahl des für den jeweiligen Anwendungszweck optimal geeigneten Riemens genutzt werden. Ein Verfahren, das derartige Informationen bei der Auswahl einer Maschinenkomponente nutzt, ist Gegenstand einer deutschen Patentanmeldung 10 2015 107 176.2, deren Inhalt in die Offenbarung der vorliegenden Anmeldung einbezogen wird.

Insbesondere in Kombination mit der erfindungsgemäßen Vorgehensweise, jedoch auch unabhängig davon, kann es zweckmäßig sein, wenn die Markierung von Riemen oder Scheibe Informationen über Eigenschaften des Riemens oder der Scheibe trägt, so dass die jeweiligen Informationen von der Überwachungseinrichtung ausgelesen werden und bei der Ermittlung der Belastungen berücksichtigt werden können. Die so erzielte Individualisierung erlaubt nicht nur eine eindeutige Zuordnung der jeweiligen Informationen zu dem betreffenden Bauteil, sondern auch eine Optimierung der Aussagekraft der durch die Überwachung der Markierung erhaltenen Informationen.

In diesem Fall handelt es sich bei der Markierung, mit der der Riemen oder die Scheibe ausgestattet wird, somit um ein Identifikationsmittel, das nicht nur eine durch eine Überwachungseinrichtung erfassbare Kennzeichnung, sondern auch ein Informationsträger ist. Das Identifikationsmittel kann dann beliebige Informationen (z.B. Hersteller/ Herstelldatum/ Kundennamen/ Inbetriebnahme Datum/ Materialeigenschaften etc./ geplante Lebensdauer/ Wechselintervalle/ Gewährleistungsvereinbarungen etc.) tragen. Diese Informationen können von der Auswerteinrichtung bei der Ermittlung der zurückliegend erfolgten Belastungen des Riemens oder der Scheibe und bei der Erstellung einer Prognose für die noch verbleibende Lebensdauer dieser Elemente genutzt werden.

Indem der Riemen oder die Scheibe selbst die für ihn relevante und ihn eindeutig individualisierende Information trägt, lässt sich die erfindungsgemäße Verfahrensweise unter Verwendung ein und derselben Überwachungs- und Auswerteinrichtung mit beliebigen Riemen/Scheibenkombinationen durchführen, ohne dass dazu in der Überwachungs- oder Auswerteinrichtung gesonderte, auf die jeweilige Riemen/Scheibenkombination bezogene Daten hinterlegt werden müssen. Jedoch ist es auch unabhängig von der Erfindung möglich, mit Hilfe entsprechend individualisierter Riemen oder Scheiben eine Überwachung der im Laufe des Einsatzes eintretenden Eigenschaftsveränderungen durchzuführen.

Als Markierung insbesondere des Riemens besonders geeignet sind Identifikationsmittel, die aktiv Informationen an einen Empfänger übertragen oder durch einen Empfänger so aktiviert werden können, dass sie auf Anforderung die von ihnen getragene Information an den Empfänger senden. Die Markierung in der Scheibe kann dann durch einen Sensor gebildet sein, der in diesem Fall nicht nur anzeigt, wenn die Auslösestellung erreicht ist, sondern auch als Überwachungseinrichtung dient. So gibt in diesem Fall der in der Scheibe sitzende Sensor das einen vollständigen Umlauf des Riemens anzeigende Signal aus, wenn sich der Chip des Riemens und der Sensor in der Auslösestellung begegnen.

Selbstverständlich kann es auch in Kombination mit anderen Markierungen zweckmäßig sein, die Markierung der Scheibe als Sensor auszubilden, der im Sinne einer Überwachungseinrichtung aktiviert wird, wenn er sich gemeinsam mit der Markierung des Riemens in der Auslösestellung befindet.

Hierzu müssen, sofern entsprechend markierte Riemen und Scheiben im Sinne der Erfindung eingesetzt werden, lediglich der als Markierung dienende Sensor der Scheibe und die Markierung des Riemens so aufeinander abgestimmt sein, dass dann, wenn die Markierungen von Riemen und Scheibe gemeinsamen in der Auslösestellung angekommen sind, die Markierung des Riemens ein Signal des als Markierung der Scheibe dienenden Sensors auslöst.

Eine weitere Ausgestaltung, die in der Praxis in vielen Fällen im Zusammenhang mit der Erfindung besonders vorteilhaft ist, jedoch auch unabhängig davon als selbstständiger Vorschlag großen Nutzen bei der Überwachung von Riemenantrieben gibt, ist dadurch gekennzeichnet, dass die Markierung von Riemen oder Scheibe als aktives Element ausgebildet ist, das eine oder mehrere Eigenschaften des Riemens oder der Scheibe im Betrieb erfasst und an die Überwachungseinrichtung liefert, wenn die Auslösestellung erreicht ist. Hier sind die Markierungen von Riemen oder Scheibe so ausgebildet, dass sie aktiv eine oder mehrere Eigenschaften des Riemens oder der Scheibe im Betrieb überwachen und das Ergebnis dieser Überwachung als Signal an die Überwachungseinrichtung liefern, wenn die Auslösestellung erreicht ist. So ist es beispielsweise möglich, mittels eines als Markierung dienenden, im oder am Riemen angeordneten Sensors die im Riemen herrschenden dynamischen oder statischen Kräfte, die Temperaturentwicklung des Riemens, seine Dehnung oder seine sonstigen Verformungen beim Umlauf um die Scheibe zu erfassen.

Auch der zum Antrieb der Rolle verwendete Antriebsriemen kann entsprechend mit aktiven Elementen, wie Sensoren, ausgestattet sein. Beispielsweise über Dehnungsmessstreifen lässt sich die Dehnung der Riemen und damit die anliegende Zugbelastung bestimmen. Diese wiederum ist ein Maß für das anliegende Drehmoment. Antriebsriemen müssen beispielsweise gemäß der zu übertragenden Kraft vorgespannt werden. Eine unkorrekte (Vor-)Spannung des Riemens führt zu einer Reduzierung der Riemenlebensdauer. Indem mittels geeigneter, optional als Markierungen dienender Sensoren das anliegende Drehmoment und die vorhandene Riemenvorspannung erfasst werden und das Ergebnis dieser Erfassung mit einem Sollwert für die Vorspannung verglichen wird, kann bei einer Unterschreitung der Vorspannung ein Warnsignal ausgegeben oder der Antrieb abgeschaltet werden, um eine Beschädigung des Riemens zu vermeiden. Genauso kann es in Fällen, in denen die Riemen-Vorspannung abhängt vom Ausdehnungsverhalten des Gerüstes, in dem der jeweilige Riemenantrieb betrieben wird, die jeweils herrschende Riemenvorspannung erfasst und erforderlichenfalls nachgeregelt werden, wenn sich in Folge von hohen Außentemperaturen und damit einhergehender Ausdehnung des Gerüstes eine zu hohe Vorspannung durch Zunahme des Abstands zwischen den Drehachsen der Riemenscheiben oder in Folge von niedrigen Außentemperaturen eine zu niedrige Vorspannung durch Verminderung des Abstands zwischen den Drehachsen der Riemenscheibe ergibt.

Ein Beispiel für ein Identifikationsmittel, das eine große Zahl von mittels eines geeigneten Sensors auslesbaren Informationen trägt, ist ein RFID-Chip.

Die Baugröße von heute zur Verfügung stehenden auslesbaren Identifikationsmitteln oder aktiv messenden Sensoren ist derart minimiert, dass derartige Elemente im Riemen angeordnet werden können, ohne dessen Funktion zu stören. Als Ort für die Positionierung eines solchen Elements bietet sich bei einem Zahn- oder Synchronriemen beispielsweise der Bereich oberhalb der Mitte eines der Zähne und unterhalb der Zugträger im elastischen Einbettungsmaterial (z.B. Gummi oder PU) des Riemens an. Bei Keilriemen kann das entsprechende Element unterhalb des Zugträgers angeordnet werden. Bei Flachriemen ist eine Anordnung zwischen einer der Lagen des Riemens möglich. Darüber hinaus ist es bei jedem Riementyp Fall möglich, das Identifikationsmittel an der Rückenseite anzuordnen. Hierzu kann dort eine Ausnehmung ausgebildet sein, in die das Identifikationsmittel eingesetzt wird.

RFID-Chips, Sensoren und andere entsprechend miniaturisierte und als Markierung eines Riemens in Frage kommende Bauteile lassen sich bereits bei der Herstellung des Riemens in das Riemenmaterial einbetten, wenn die Riemen individuell hergestellt werden.

In der Praxis ist eine solche individuelle Fertigung jedoch die Ausnahme. In der Regel wird vielmehr vom Hersteller ein sehr breiter Riemen in Form eines Wickels, auch "Slab" genannt, bereitgestellt, von dem Riemen abgeteilt werden ("Konfektionierung"), dessen jeweilige Breite dann an die jeweils durch die vorgesehene Anwendung sich ergebende Breite angepasst ist.

Um auch in diesem Regelfall eine Kennzeichnung des Riemens vornehmen zu können, wird hier vorgeschlagen, dass die jeweilige Markierung nach der Konfektionierung in den jeweiligen Riemen eingebracht wird. Hierzu kann beispielsweise in den Riemen an geeigneter Stelle eine Ausnehmung eingeformt werden, in die das als Markierung dienende Bauelement gesetzt wird. Anschließend kann die Ausnehmung verschlossen werden, um das Bauelement gegen Umwelteinflüsse zu schützen.

Die Ausnehmung kann als Bohrung oder auf sonstige geeignete Weise materialabhebend in das Material des Riemens eingebracht werden. Hierzu kann eine Bearbeitungsmaschine vorgesehen sein, die die Arbeitsschritte "Positionieren des Riemens", "Einbringen der Ausnehmung", "Einsetzen des Bauelements in die Ausnehmung", "optionales Verschließen der Ausnehmung", "Entnehmen des Riemens" an entsprechenden Bearbeitungsstationen ausführt. Die Maschine kann auch als Bearbeitungszentrum ausgebildet sein, in dem die betreffenden Arbeitsschritte in einer Aufspannung des Riemens absolviert werden.

Die von der jeweils vorgesehenen Überwachungs- bzw. Auswerteinrichtung gelieferten Signale können per Datenfernübertragung übertragen werden. Hierzu können die im jeweiligen Betrieb vorhandenen Datennetze genutzt werden. Dazu zählen festverkabelte (z.B. LAN) wie drahtlos (z.B. WLAN, Richtfunk) operierende Datenübertragungssysteme.

Die aus der Überwachung erhaltenen Daten können über die Datenfernübertragung an den Hersteller oder Lieferanten des Riemens oder der Scheibe gesendet und dort für Zwecke der Analyse, Prognose und zum Aufbau eines Auswahlsystems der oben bereits erwähnten Art genutzt werden. Die Messergebnisse können so in die Weiterentwicklung der jeweils betrachteten Maschinenkomponenten "Riemen", "Scheibe" "Riemen/Scheibe-Kombination" einbezogen werden. Auch können vom Hersteller oder Lieferanten erforderlichenfalls Warnungen zu bevorstehenden Schadensereignissen an den Nutzer des jeweils überwachten Riemenantriebs ausgegeben werden.

Ein weiterer Aspekt der hier offenbarten Lehre besteht darin, dass sich durch die Markierung des Riemens oder der Scheibe mit einem das jeweilige Bauelement individualisierenden Identifikationsmittel sicherstellen lässt, dass jeweils nur der richtige Riemen und die richtige Scheibe in Kombination miteinander und bezogen auf die jeweilige Anwendung eingesetzt werden. Fehler bei der Montage oder Auswahl der jeweiligen Paarung "Riemen/Scheibe" lassen sich so sicher vermeiden.

Im Fall eines Schadens lassen sich mit den Informationen, die durch die hier in ihren verschiedenen Facetten vorgestellten Möglichkeiten einer Überwachung gewonnen werden, Gewährleistungs- oder Garantiefragen klären. Dies gilt insbesondere dann, wenn die betreffende Überwachung nach Maßgabe der Erfindung durchgeführt wird.

Es versteht sich von selbst, dass sowohl im Riemen als in der jeweiligen Scheibe nicht nur eine einzige, sondern bedarfsweise auch zwei oder mehr Markierungen in geeigneter Verteilung angeordnet sein können, um eine optimale Erfassung der jeweils überwachten Eigenschaften zu ermöglichen. Dabei können alle oder nur einzelne Markierungen als aktive Elemente ausgebildet sein. Denkbar ist es beispielsweise auch, eine als passiver Informationsträger ausgebildete Markierung mit einer aktiven Markierung zu kombinieren, die als Sensor zur Erfassung bestimmter Eigenschaften oder Zustände von Riemen oder Scheibe dient.

Im Fall, dass es sich bei der Markierung des Riemens um ein aktives Element handelt, kann dessen Energieversorgung beispielsweise in der eingangs erwähnten, aus dem Stand der Technik bekannten Weise erfolgen. Alternativ ist es auch denkbar, die erforderliche Energie induktiv auf das aktive Element oder einen mit dem Element verkoppelten, ebenfalls im Riemen angeordneten Energiespeicher zu übertragen.

Möglich ist es auch, an dem Riemen, vorzugsweise an dessen außen liegenden Rücken, ein photovoltaisches Element zur Energieerzeugung anzubringen. Solche Elemente stehen heute als flexible Folien zur Verfügung, so dass sie bei geeigneter Ausführung auch die Verformungen mitmachen können, die der Riemen bei seiner Umlenkung an einer Scheibe des Riemenantriebs erfährt.

Bei Anwendungen, bei denen ein Riemen reversierend zwischen zwei Endlagen betrieben wird und bei denen bestimmte Riemenabschnitte zu keinem Zeitpunkt an den Umlenkscheiben des Riemenantriebs umgelenkt werden, ist es darüber hinaus möglich, Elemente zur Energieerzeugung in den betreffenden, nicht umgelenkten Abschnitten zu montieren, so dass sie weitestgehend frei von mechanischen Belastungen gehalten werden.

Im Fall, dass der Ort, an dem die Energie im Riemen erzeugt oder eingekoppelt wird, beabstandet ist vom Ort, an dem die Energie beispielsweise von einem aktiven Markierungs- oder Sensorelement benötigt wird, kann in den Riemen ein elektrisch leitender Verbindungsleiter eingearbeitet sein, um das jeweilige aktive Element mit der Einrichtung zur Erzeugung, Speicherung oder Einkopplung der elektrischen Energie zu verbinden. Alternativ kann zu diesem Zweck auch der Zugträger oder eine andere Lage des Riemens genutzt werden, wenn diese aus einem elektrisch leitenden Material besteht oder in die betreffende Lage ein elektrischer Leiter zum Zwecke der Herstellung einer elektrischen Verbindung einbezogen ist. Genauso ist es selbstverständlich möglich, in dem Riemen vorgesehene elektrisch leitfähige Fasern zur Übermittlung von Signalen zwischen einer als aktiver Messsensor ausgestalteten Markierung und einer Einrichtung zur Signalübertragung zu nutzen. Des Weiteren können solche elektrisch leitenden Fasern auch als Antenne zur drahtlosen Übertragung von Signalen an eine entfernt stehende Überwachungseinrichtung genutzt werden.

Bei der Scheibe kann die Energieversorgung einer aktiven, als Informationsträger oder Sensor ausgebildeten Markierung beispielsweise dadurch erfolgen, dass in der Scheibe eine nach dem Prinzip eines Nabendynamos ausgebildete Energieerzeugungseinrichtung angeordnet wird. Ebenso ist es denkbar, an der Scheibe ein photovoltaisches Element zur Energieerzeugung anzuordnen. Auch wäre es hier möglich, die benötigte Energie durch induktive Ankopplung berührungslos zu übertragen oder die an sich bekannte Möglichkeit der Erzeugung von elektrischer Energie mittels eines in den Riemen implementierten Piezoelements zu nutzen. Selbstverständlich kann die benötigte Energie bei ausreichend vorhandenem Bauraum auch durch Batterien oder Akkumulatoren bereitgestellt werden, die in der jeweiligen Scheibe oder dem jeweiligen Riemen angeordnet werden.

Abhängig von den jeweiligen Anforderungen können unterschiedliche, als Sensoren ausgebildete Markierungen in der Scheibe oder dem Riemen angeordnet sein, um unterschiedliche Eigenschaften und Einflussgrößen zu erfassen. Jede als Sensor ausgebildete Markierung kann dabei erforderlichenfalls mit der für ihren Betrieb benötigten Energie versorgt werden.

Im Fall, dass eine Scheibe mit einem oder mehreren als Markierung dienenden Sensoren versehen wird, kann es in Abhängigkeit vom jeweils für die Scheibe verwendeten Material zweckmäßig sein, Änderungen des Volumens zu erfassen. Zu solchen Änderungen kann es in Folge von Temperaturänderungen oder in Folge von Aufquellen aufgrund von äußeren Einflüssen, wie Feuchtigkeit oder Chemikalieneinwirkung, kommen.

Die von der Überwachungseinrichtung jeweils erfassten Informationen können bedarfsweise von mehreren Sendern oder zentral von einem gemeinsamen Sender zu einem entsprechenden Empfänger übertragen werden.

Die Aussagekraft der in der hier erläuterten, insbesondere erfindungsgemäß durchgeführten Weise erzielten Überwachungsergebnisse kann dadurch unterstützt werden, dass ein Drehmomentsensor auf der Antriebswelle angebracht wird, über die der motorische Antrieb des Riemenantriebs erfolgt. Auf diese Weise können die auf den Riemenantrieb wirkenden Antriebsmomente erfasst werden, woraus sich die im Riemenantrieb auftretenden Verluste bestimmen lassen.

Lastkollektive können aufgezeichnet werden und mit den zur Berechnung der Wellen (oder Achsen) getroffenen Annahmen verglichen werden. Dies erlaubt Hinweise zur Belastung von Kerben in der Welle aufgrund von Passfedern, Seegeringeinstichen etc. Auf diese Weise lassen sich beliebig viele, die Lebensdauer der Komponente und damit die Funktionsfähigkeit der Anlage beeinflussende Faktoren messen und unter Zuhilfenahme der erzeugten Energie auf eine separate Datenverarbeitung zur weiteren Auswertung übertragen.

Die Fördergeschwindigkeit ergibt sich aus der Wellendrehzahl und dem äußeren Durchmesser einer in einem Riemenantrieb zur Umlenkung des Riemens eingesetzten Scheibe. Der Durchmesser einer Riemen-Scheibe unterliegt einem kontinuierlichen Verschleiß. Mittels geeigneter Sensoren lässt sich die in Folge von Verschleiß auftretende Durchmesserabnahme feststellen. Wird eine optimal konstante Fördergeschwindigkeit gefordert, so kann die jeweils erfasste Durchmesserabnahme durch eine Erhöhung der Drehzahl kompensiert werden.

Es ist bereits erwähnt worden, dass die voranstehend offenbarten Ausgestaltungen sich jeweils besonders vorteilhaft im Zusammenhang mit der Erfindung auswirken und jeweils alleine oder in Kombination mit anderen Ausgestaltungen zu einem optimalen Nutzen der Erfindung beitragen.

Jedoch können die betreffenden Ausgestaltungen, soweit sie nicht unmittelbar Bezug auf die Erfindung nehmen oder auf Merkmalen der Erfindung unmittelbar aufbauen, auch unabhängig von der Erfindung die hier zu ihnen jeweils erläuterten Vorteile und Wirkungen entfalten.

Nachfolgend werden Ausführungsbeispiele anhand einer Zeichnung näher erläutert. Deren Figuren zeigen jeweils schematisch:
- Fig. 1: den prinzipiellen Aufbau eines als Linearachsenantrieb dienenden Riemenantriebs;
- Fig. 2: den prinzipiellen Aufbau eines so genannten "Omegaantriebs (Ω-Antrieb) Q";
- Fig. 3: einen Riemenantrieb;
- Fig. 4: einen Abschnitt eines in dem Riemenantrieb gemäß Fig. 3 eingesetzten Riemens in seitlicher Ansicht;
- Fig. 5: den Riemenabschnitt gemäß Fig. 5 in einer Draufsicht auf seinen Rücken.

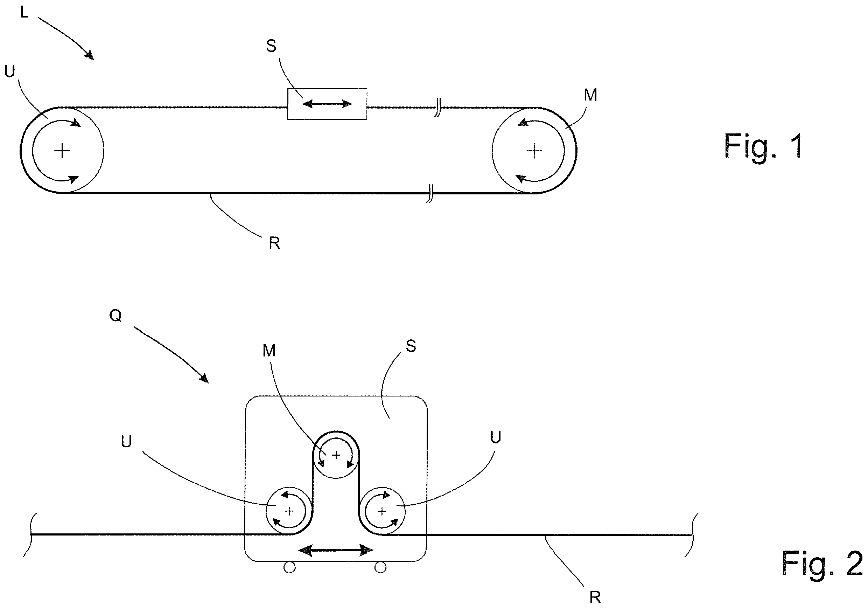

Riemenantriebe werden typischerweise bei Linearachsenantrieben eingesetzt. Im einfachsten Fall besteht eine Linearantriebseinheit L, wie in Fig. 1 dargestellt, aus einer Antriebsscheibe M, einer Umlenkscheibe U, einem verfahrbaren Schlitten S und dem Riemen R, mit dem der Schlitten S verkoppelt ist. Der Schlitten S wird mittels des Riemens R zwischen seinen beiden Endlagen im ständigen Wechsel hin und her bewegt.

Ein weiteres Beispiel für einen Riemenantrieb ist der in Figur 2 dargestellte so genannte "Omegaantrieb (Ω-Antrieb)". Die Antriebsscheibe M des Motors und zwei als Rollen ausgebildete Umlenkscheiben U sind hier an einem verfahrbaren Schlitten S befestigt.

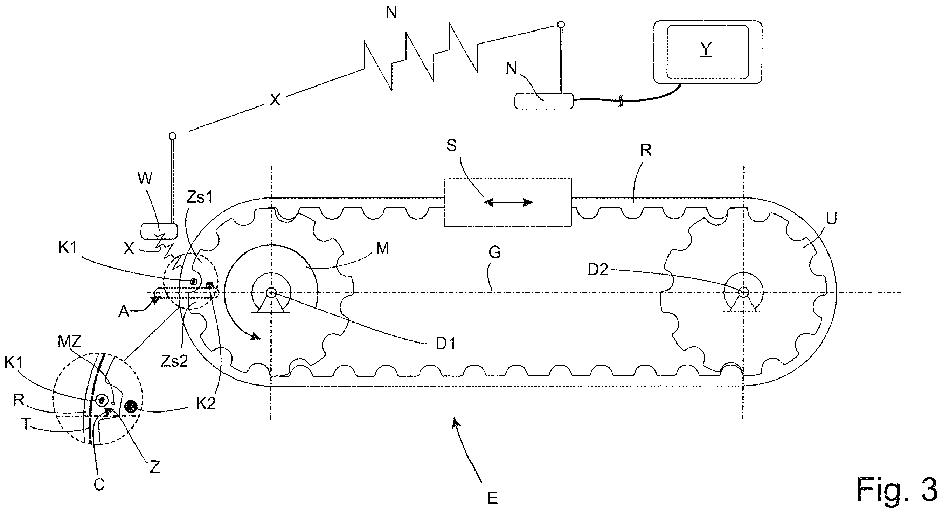

In Fig. 3 ist anhand einer anderen Antriebseinheit E demonstriert, wie ein erfindungsgemäßer Riemenantrieb ausgestaltet sein kann und wie die erfindungsgemäße Überwachung des Riemenantriebs (= Antriebseinheit L) ausgeführt werden kann. Die Antriebseinheit E gemäß Fig. 3 eignet sich beispielsweise dazu, ein von der Motorscheibe M aufgebrachtes Antriebsmoment auf einen mit der Umlenkscheibe U verkoppelten, hier nicht gezeigten Abtrieb zu übertragen.

Der Riemen R ist hier als konventioneller Zahnriemen ausgebildet.

Die Antriebsscheibe M und die Umlenkscheibe U sind dementsprechend an ihren mit den Zähnen Z des Riemens R in Kontakt kommenden Umfangsflächen mit einer korrespondierend zur Geometrie und Anordnung der Zähne Z des Riemens R geformten Zahnung versehen, so dass die Zähne Z des Riemens R beim Umlauf um die Scheiben U,M formschlüssig in die Zahnung der Scheiben U,M greifen.

Der Riemen R umschlingt die im vorliegenden Fall gleich großen Scheiben U,M um jeweils 180°.

Im Riemen R ist als Markierung ein RFID-Chip K1 angeordnet. Der RFID-Chip K1 sitzt dabei in einer Ausnehmung, die in einen der Zähne Z des Riemens R gebohrt worden ist, nachdem der Riemen R konfektioniert worden ist. Die Ausnehmung mit dem RFID-Chip K1 ist dabei im elastischen Einbettungsmaterial des Riemens R im Bereich des Fußes des Zahns Z, d.h. zwischen der Mitte MZ des Zahns Z und dem Zugträger T des Riemens R, angeordnet.

Der RFID-Chip K1 trägt beispielsweise Informationen über den Typ, das Herstelldatum, das Datum der Nutzungsaufnahme sowie die verwendeten Materialen des Riemens und desgleichen.

In der Antriebsscheibe M ist als Markierung ein Sensor K2 angeordnet. Bei dem Sensor K2 handelt es sich um eine Einrichtung, mit der die auf dem als Markierung des Riemens R dienenden RFID-Chip K1 gespeicherte Information ausgelesen werden kann.

Der Sensor K2 ist in einem Randbereich der Scheibe M nahe einer Lücke C zwischen zwei Zähnen Zs1,Zs2 der Scheibe U angeordnet. Taucht der mit dem RFID-Chip K1 versehene Zahn Z des Riemens R in die Lücke C ein, begegnen sich folglich der RFID-Chip K1 und der Sensor K2 und der Sensor K2 liest die auf dem RFID-Chip K1 vorhandene Information. Der Sensor K2 dient somit als Überwachungseinrichtung, die erfasst, wenn sich der Sensor K2 und der RFID-Chip K1 gegenüberstehen.

Als Auslösestellung A, d.h. als die Stellung, bei der sich die Markierung des Riemens (RFID-Chip K1) und die Markierung der Scheibe (Sensor K2) direkt gegenüberstehen und der Sensor K2 ein entsprechendes Signal X abgibt, ist die Stellung definiert, in der der Sensor K2 und der RFID-Chip K1 bei in der Lücke C sitzendem, mit dem RFID-Chip K1 ausgestatteten Zahn Z des Riemens R gemeinsam auf der Geraden G sitzen, die durch die Drehachsen D1,D2 der Scheiben U,M verläuft ("09:00 Uhr Stellung der Scheibe U"). In Fig. 3 stehen der RFID-Chip K1 und der Sensor K2 bei der für die Antriebsscheibe M angegebenen Drehrichtung somit kurz vor der Auslösestellung A.

Der Sensor K2 liefert das Signal X, welches anzeigt, dass der RFID-Chip K1 und der Sensor K2 gleichzeitig die Auslösestellung A erreicht haben, als Funksignal an eine Empfangs- und Sendeeinrichtung W, die das Signal X, beispielsweise per WLAN oder LAN, an eine Empfangseinrichtung N sendet, die wiederum mit einer Auswerteinrichtung Y verkoppelt ist.

Das Signal X kann neben dem Signal, das die Begegnung des RFID-Chips K1 und des Sensors K2 in der Auslösestellung A anzeigt, auch die Informationen umfassen, die der Sensor K2 aus dem RFID-Chip K1 ausgelesen hat.

Die Auswerteinrichtung Y erfasst die Anzahl der gesendeten Signale X und damit einhergehend die Anzahl der vom Riemen R absolvierten Umläufe. Basierend auf dieser Information und den zusätzlich übertragenen, vom RFID-Chip K1 ausgelesenen Informationen über beispielsweise Beschaffenheit und Zustand des Riemens R wird eine Prognose über dessen voraussichtlich noch verbleibende Lebensdauer erstellt und erforderliche Wartungsmaßnahmen veranlasst.

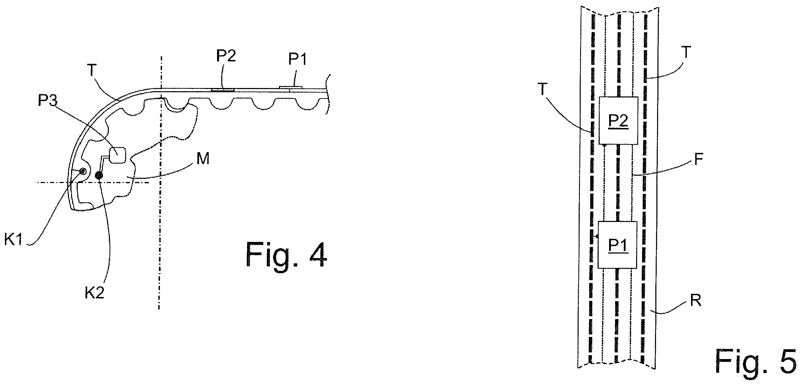

Anhand von Fig. 4 ist ersichtlich, dass im Bereich der im praktischen Einsatz besonders belasteten Zähne Z des Riemens R jeweils eine Markierung K1 angeordnet sein kann, wobei es sich bei diesen Markierungen K1, wie voranstehend erläutert, typischerweise um einen aktiven Sensor oder ein RFID-Elemente handelt. Die Markierung K1 kann dementsprechend Informationen über den Riemen R tragen, erfassen, absenden oder aufnehmen, um an den als Überwachungseinrichtung dienenden Sensor K2 zu liefern. Neben den Markierungen K1 kann im Bereich der Zähne Z des Riemens R auch eine Speichereinrichtung B zum Speichern von elektrischer Energie vorhanden sein, über die die aktiven Markierungen K1, d.h. die als Markierungen im Sinne der Erfindung dienenden Sensoren oder aktiven Identifikationsmittel, mit der für ihren Betrieb benötigten Energie versorgt werden.

Wie in den Fig. 4 und 5 gezeigt, sind an der von den Zähnen Z des Riemens R abgewandten Rückenseite des Riemens R photovoltaische Elemente P1 zur Erzeugung elektrischer Energie oder lichtemittierende Elemente P2, beispielsweise Photodioden, angeordnet, die Lichtsignale abgeben können, um bestimmte Betriebszustände des jeweiligen Riemens R zu signalisieren. Die Verbindung zwischen den Elementen P1 und dem Energiespeicher B bzw. der Markierung K1 erfolgt über in den Riemen R eingearbeitete elektrisch leitende Fasern F, die beispielsweise Teil des Zugträgers T oder als separate Verbindungsleiter in das Material des Riemens R eingearbeitet sein können.

In entsprechender Weise ist benachbart zum Sensor K2 an der Stirnseite der Antriebsscheibe M ein photovoltaisches Element P3 zur Erzeugung der Energie angeordnet, die zum Betrieb des Sensors K2 benötigt wird.

Als weiteres praktisches Beispiel für die hier offenbarte Lehre zu nennen sind Hubantriebe, bei denen aus Sicherheitsgründen in der Regel zwei parallel betriebene Zahnriemen betrieben werden. Fällt ein Riemen aus, so kann der verbleibende Riemen die Last noch halten oder zumindest kontrolliert absetzen.

Hubantriebe führen häufig nur eine Bewegung zwischen einer unteren und einer oberen Endlage durch, zwischen denen im Bedarfsfall jedoch auch noch weitere Stopps an definierten Positionen absolviert werden können. In Folge dessen werden immer die gleichen Zähne der Riemen mit den Brems- und Beschleunigungskräften belastet. Es handelt sich dabei um die Zähne, die sich zum Zeitpunkt des jeweiligen Stopps bzw. beim Erreichen der jeweiligen Endlage im Umschlingungsbereich der Riemenscheibe befinden. In dergleichen Hubposition ist auch immer der gleiche Riemenzahn in der gleichen Scheibenlücke.

Indem die Riemen und die Scheiben mit einer Markierung, insbesondere einer als Identifikationsmittel ausgebildeten Markierung, versehen werden, können die erreichten Hübe durch Zählen der Kontakte in den jeweiligen Positionen ermittelt werden. Dazu können an geeigneten Stellen als Markierung beispielsweise ein RFID in einen Riemenzahn und ein ebenso als Markierung dienender Sensor in eine Scheibenlücke implementiert werden. Über die vom RFID getragene Information wird der jeweilige Zahn eindeutig gekennzeichnet, so dass eindeutig festgestellt werden kann, wenn der Zahn die jeweilige Lücke in der kritischen Stopp-Position erreicht. Die anderen Riemenzähne werden einfach von der Scheibe überrollt, ohne dass hier große Belastungen auf die jeweiligen Zähne wirken. Auf diese Weise lässt sich für die "kritischen" Zähne die Anzahl der erfolgten Kontakte zwischen den betreffenden Zähnen und der Scheibe ermitteln und durch Abgleich mit den in einer Datenbank hinterlegten erreichbaren Kontakten bis zu einem möglichen Riemenausfall die Restlebensdauer zuverlässig vorhersagen.

Die ideale Kraftaufteilung auf beide Riemen ergibt sich, wenn beide Riemen in identischer Weise produziert sind und identisch vorgespannt sind. Über Dehnungsmessstreifen lässt sich die Kraft bzw. die Zugbelastung der Riemen bestimmen. Die Zugbelastung kann mittels geeigneter Sensoren gemessen werden und mittels geeigneter Übertragungsmittel (beispielsweise mittels RFIDs) an einen externen Empfänger übermittelt werden. Dies kann an den Scheiben oder an beliebiger Stelle des Riemens erfolgen.

Denkbar ist auch, dass beide Riemen bzw. Sensoren an beiden Riemen die jeweils anliegende Spannung untereinander abgleichen. Zur Energieleitung, -übertragung oder -einspeisung können die im Riemen vorhandenen Zugträger verwendet werden.

Im reversierenden Betrieb laufen nicht alle Abschnitte des Riemens um die Scheibe. An den Bereichen, die nicht um die Scheibe laufen, kann eine in den Riemen implementierte Signaleinrichtung beispielsweise durch ein optisches Signal anzeigen, ob sich der Riemen in einem ordnungsgemäßen Zustand befindet oder nicht. Insbesondere kann diese Signaleinrichtung anzeigen, ob die in den Riemen vorliegenden Belastungen innerhalb eines vorgegebenen Toleranzrahmens übereinstimmen oder nicht. Kommt es zu einer zu großen Abweichung, kann auch dies über die mit der Überwachungseinrichtung verkoppelte Auswerteinrichtung gemeldet werden, so dass die Anlage vor dem Eintritt eines größeren Schadens abgeschaltet werden kann.

### BEZUGSZEICHEN

- A: Auslösestellung
- C: Lücke zwischen den Zähnen Zs1 ,Zs2
- D1,D2: Drehachsen der Scheiben U,M
- E: Antriebseinheit
- F: elektrisch leitende Fasern
- G: Gerade
- K1: RFID-Chip
- K2: Sensor ("Markierung" und "Überwachungseinrichtung")
- L: Linearantriebseinheit
- M: Antriebsscheibe
- MZ: Mitte eines Zahns Z
- N: Empfangseinrichtung
- P1: photovoltaisches Element
- P2: lichtemittierende Elemente
- P3: photovoltaisches Element
- Q: Omega-Antrieb
- R: Riemen
- S: Schlitten
- T: Zugträger des Riemens R
- U: Umlenkscheiben
- W: Empfangs- und Sendeeinrichtung
- X: Signal
- Y: Auswerteinrichtung
- Z: Zähne des Riemens R
- Zs1,Zs2: Zähne der Scheibe U

## Patentansprüche

1. Verfahren zum Überwachen eines Riemenantriebs (L,E), der eine rotierbar gelagerte Scheibe (M,U) und einen Riemen (R) umfasst, der an der Scheibe (M,U) umgelenkt ist, wobei der Riemen (R) und die Scheibe (M,U) jeweils mit einer Markierung (K1,K2) ausgestattet und Riemen (R) und Scheibe (M,U) zueinander so positioniert sind, dass sich beim Umlauf des Riemens (R) um die Scheibe (M,U) die Markierungen (K1 ,K2) von Scheibe (M,U) und Riemen (R) in einer Auslösestellung direkt gegenüber stehen, **gekennzeichnet durch** folgende Arbeitsschritte:
a) Erfassen der Auslösestellung mittels einer Überwachungseinrichtung (K2), wobei die Überwachungseinrichtung (K2) ein Signal abgibt, wenn sich die Markierungen (K1,K2) in der Auslösestellung befinden;
b) Erfassen der Anzahl der über einen bestimmten zurückliegenden Zeitraum ausgelösten Signale (X);
und
c) Ermitteln der Belastungen, denen der Riemen (R) oder die Scheibe (M,U) während des zurückliegenden Zeitraums ausgesetzt gewesen ist, auf Grundlage der Anzahl der ausgelösten, der Anzahl der Umläufe des Riemens (R) entsprechenden Signale (X), und unter Berücksichtigung von relevanten Einflussgrößen.

2. Verfahren nach Anspruch 1, **dadurch gekennzeichnet, dass** im Arbeitsschritt c) als Einflussgrößen die Materialeigenschaften von Riemen (R) und Scheibe (M,U), die Geometrie von Riemen (R) und Scheibe (M,U), die Reibverhältnisse, die herrschenden statischen oder dynamischen Kräfte, die Dehnung oder Verformungen des Riemens (R) beim Umlauf um die Scheibe (M,U), die Temperaturen, das Volumen, die Umgebungsatmosphäre oder die Leistungsaufnahme eines zum Antrieb des Riemenantriebs (E,L) vorgesehenen Antriebsmotors berücksichtigt werden.

3. Verfahren nach einem der voranstehenden Ansprüche, **dadurc**h **gekennzeichnet, dass** auf Grundlage der ermittelten Belastungen und unter Berücksichtigung der Einflussgrößen mittels einer Auswerteinrichtung (Y) eine Prognose über die zu erwartende Lebensdauer des Riemens (R) oder der Scheibe (M,U) erstellt wird.

4. Verfahren nach einem der voranstehenden Ansprüche, **dadurc**h **gekennzeichnet, dass** die im Arbeitsschritt b) erfasste Anzahl von Signalen oder die in Arbeitsschritt c) ermittelten Belastungen mit einem Sollwert verglichen werden und **dass** im Fall, dass die erfasste Anzahl der Signale oder die ermittelte Belastung von dem jeweiligen Sollwert abweicht, ein Hinweis auf die Notwendigkeit eines Wartungseingriffs oder eines Nothalts ausgelöst wird.

5. Verfahren nach einem der voranstehenden Ansprüche, **dadurch gekennzeichnet, dass** die Markierung (K1 ,K2) von Riemen (R) oder Scheibe (M,U) Informationen über Eigenschaften des Riemens (R) oder der Scheibe (M,U) tragen, **dass** die jeweiligen Informationen von der Überwachungseinrichtung (K2) ausgelesen werden und bei der Ermittlung der Belastungen berücksichtigt werden.

6. Riemenantrieb, der
- eine rotierbar gelagerte Scheibe (M,U),
- einen an der Scheibe (M,U) umgelenkten Riemen (R) und
- eine Überwachungseinrichtung (K2)
umfasst, und **dass** an dem Riemen (R) und an der Scheibe (M,U) jeweils eine Markierung (K1,K2) angebracht ist, **dadurch gekennzeichnet dass** die Überwachungseinrichtung (K2) ein Signal (X) auslöst, wenn die Markierungen (K1,K2) von Scheibe (M,U) und Riemen (R) sich an der Scheibe (M,U) direkt gegenüber stehen.

7. Riemenantrieb nach Anspruch 6, **dadurch gekennzeichnet, dass** die Überwachungseinrichtung (K2) mit einem Zähler verkoppelt ist, der die Anzahl der von der Überwachungseinrichtung (K2) ausgelösten Signale (X) zählt.

8. Riemenantrieb nach Anspruch 7, **dadurch gekennzeichnet, dass** der Zähler Teil einer Auswerteinrichtung (Y) ist, die die Anzahl der von der Überwachungseinrichtung (K2) ausgelösten Signale (X) erfasst und basierend auf dieser Information und unter Berücksichtigung weiterer Einflussgrößen die Belastungen ermittelt, denen der Riemen (R) oder die Scheibe (M,U) während ihres zurückliegenden Einsatzes ausgesetzt gewesen sind.

9. Riemenantrieb nach einem der Ansprüche 6 bis 8, **dadurch gekennzeichnet, dass** die Markierung (K1 ,K2) der Scheibe (M,U) oder des Riemens (R) ein Identifikationsmittel ist, welches Informationen über den Riemen (R) trägt.

10. Riemenantrieb nach Anspruch 9, **dadurch gekennzeichnet, dass** die Markierung (K1,K2) ein RFID-Chip ist.

11. Riemenantrieb nach Anspruch 8 und einem der Ansprüche 9 oder 10, **dadurc**h **gekennzeichnet, dass** die Auswerteinrichtung (Y) mit einem Sensor (K2) zum Auslesen der von der Markierung (K1) getragenen Informationen verkoppelt ist.

12. Riemenantrieb nach einem der Ansprüche 6 bis 11, **dadurch gekennzeichnet, dass** die Markierung (K1 ,K2) von Riemen (R) oder Scheibe (M,U) als aktives Element ausgebildet ist, das eine oder mehrere Eigenschaften des Riemens (R) oder der Scheibe (M,U) im Betrieb erfasst und an die Überwachungseinrichtung (K2) liefert, wenn die Auslösestellung erreicht ist.

13. Riemenantrieb nach einem der Ansprüche 9 bis 12, **dadurch gekennzeichnet, dass** im Fall, dass der Riemen (R) ein Zahn- oder Synchronriemen ist, das Identifikationsmittel oberhalb der Mitte der Zähne und unterhalb der Zugträger im elastischen Einbettungsmaterial des Riemens (R) oder an der Rückenseite des Riemens (R) angeordnet ist, **dass** im Fall, dass der Riemen (R) ein Keilriemen ist, das Identifikationsmittel unterhalb des Zugträgers oder an der Rückenseite des Riemens (R) angeordnet ist, oder **dass** im Fall, dass der Riemen (R) ein Flachriemen ist, das Identifikationsmittel zwischen den Lagen des Riemens (R) angeordnet ist.

14. Riemenantrieb nach einem der Ansprüche 6 bis 13, **dadurch gekennzeichnet, dass** die Überwachungseinrichtung (K2) mit einer Einrichtung (W) zur Datenfernübertragung verbunden ist.

15. Riemenantrieb nach einem der Ansprüche 6 bis 14, **dadurch gekennzeichnet, dass** die Markierung (K1,K2) von Riemen (R) oder Scheibe (M,U) gleichzeitig als Überwachungseinrichtung (K2) ausgebildet ist.

## Claims

1. Method for monitoring a belt drive (L, E) comprising a rotatably mounted disc (M, U) and a belt (R) which is deflected at the disc (M, U), wherein the belt (R) and the disc (M, U) are respectively equipped with a marking (K1, K2) and the belt (R) and the disc (M, U) are positioned with respect to each other such that the markings (K1, K2) of the disc (M, U) and the belt (R) are directly opposite each other in a trigger position when the belt (R) circulates around the disc (M, U), **characterised by** the following work steps:
a) Recording the trigger position by means of a monitoring device (K2), wherein the monitoring device (K2) emits a signal when the markings (K1, K2) are located in the trigger position;
b) Recording the number of signals (X) triggered over a certain past time period;
and
c) Determining the loads to which the belt (R) or the disc (M, U) have been subjected to during the past time period based on the number of triggered signals (X) corresponding to the number of circulations of the belt (R), and taking into consideration relevant influencing variables.

2. Method according to Claim 1, **characterised in that** in work step c), the material properties of the belt (R) and the disc (M, U), the geometry of the belt (R) and the disc (M, U), the friction conditions, the prevailing static or dynamic forces, the elongation or deformations of the belt (R) when circulating around the disc (M, U), the temperatures, the volume, the environmental atmosphere or the power consumption of a drive motor provided to drive the belt drive (E, L) are considered as influencing variables.

3. Method according to any one of the preceding claims, **characterised in that** based on the determined loads and taking into consideration the influencing variables, a prediction is made by means of an evaluation device (Y) regarding the expected service life of the belt (R) or the disc (M, U).

4. Method according to any one of the preceding claims, **characterised in that** the number of signals recorded in work step b) or the loads determined in work step c) are compared with a set value and **in that** in the case where the recorded number of signals or the determined load deviates from the respective set value, a notification regarding the necessity of a maintenance operation or an emergency stop is triggered.

5. Method according to any one of the preceding claims, **characterised in that** the markings (K1, K2) of the belt (R) or the disc (M, U) bear information regarding the properties of the belt (R) or the disc (M, U), **in that** the respective information is read from the monitoring device (K2) and considered when determining the loads.

6. Belt drive comprising
- a rotatably mounted disc (M, U),
- a belt (R) deflected at the disc (M, U) and
- a monitoring device (K2)
and
that one marking (K1, K2) is respectively applied to the belt (R) and to the disc (M, U),
**characterised in that**
the monitoring device (K2) triggers a signal (X) when the markings (K1, K2) of the disc (M, U) and the belt (R) are directly opposite each other on the disc (M, U).

7. Belt drive according to Claim 6, **characterised in that** the monitoring device (K2) is coupled to a counter which counts the number of signals (X) triggered by the monitoring device (K2).

8. Belt drive according to Claim 7, **characterised in that** the counter is part of an evaluation device (Y) which records the number of signals (X) triggered by the monitoring device (K2) and, based on this information and taking into consideration further influencing variables, determines the loads to which the belt (R) or the disc (M, U) have been subjected to during their past use.

9. Belt drive according to any one of Claims 6 to 8, **characterised in that** the marking (K1, K2) of the disc (M, U) or the belt (R) is an identification means which bears information regarding the belt (R).

10. Belt drive according to Claim 9, **characterised in that** the marking (K1, K2) is an RFID chip.

11. Belt drive according to Claim 8 and any one of Claims 9 or 10, **characterised in that** the evaluation device (Y) is coupled to a sensor (K2) for reading the information borne by the marking (K1).

12. Belt drive according to any one of Claims 6 to 11, **characterised in that** the marking (K1, K2) of the belt (R) or the disc (M, U) is formed as an active element which records one or a plurality of properties of the belt (R) or the disc (M, U) in operation and delivers them to the monitoring device (K2) when the trigger position has been reached.

13. Belt drive according to any one of Claims 9 to 12, **characterised in that** in the case where the belt (R) is a toothed belt or synchronous belt, the identification means is arranged above the centre of the teeth and below the tensile member in the elastic embedding material of the belt (R) or on the rear side of the belt (R), **in that** in the case where the belt (R) is a V-belt, the identification means is arranged below the tensile member or on the rear side of the belt (R) or **in that** in the case where the belt (R) is a flat belt, the identification means is arranged between the layers of the belt (R).

14. Belt drive according to any one of Claims 6 to 13, **characterised in that** the monitoring device (K2) is connected to a device (W) for remote data transmission.

15. Belt drive according to any one of Claims 6 to 14, **characterised in that** the marking (K1, K2) of the belt (R) or the disc (M, U) is formed at the same time as a monitoring unit (K2).

## Revendications

1. Procédé de surveillance d'un entraînement par courroie (L, E) qui comporte une poulie montée de manière rotative (M, U) et une courroie (R) qui est déviée sur la poulie (M, U), dans lequel la courroie (R) et la poulie (M, U) sont respectivement munies d'un repère (K1, K2) et la courroie (R) et la poulie (U, M) sont positionnées l'une par rapport à l'autre de telle manière que lorsque la courroie (R) tourne autour de la poulie (M, U), les repères (K1, K2) de la poulie (M, U) et de la courroie (R) se trouvent directement face à face dans une position de déclenchement, **caractérisé par** les étapes de travail suivantes :
a) la détection de la position de déclenchement au moyen d'un dispositif de surveillance (K2), le dispositif de surveillance (K2) émettant un signal lorsque les repères (K1, K2) se trouvent dans la position de déclenchement ;
b) la détection du nombre des signaux (X) déclenchés sur une période antérieure déterminée ; et
c) la détermination des contraintes auxquelles la courroie (R) ou la poulie (M, U) ont été exposées pendant la période antérieure sur la base du nombre de signaux (X) déclenchés correspondant au nombre de tours de la courroie (R), et en tenant compte de l'incidence de facteurs pertinents.

2. Procédé selon la revendication 1, **caractérisé en ce que** dans l'étape de travail c) l'on prend en considération en tant que facteurs pertinents les propriétés des matériaux de la courroie (R) et de la poulie (M, U), la géométrie de la courroie (R) et de la poulie (M, U), les rapports de frottement, les forces statiques ou dynamiques régnantes, l'allongement ou la déformation de la courroie (R) lorsqu'elle tourne autour de la poulie (M, U), les températures, le volume, l'atmosphère ambiante ou la puissance absorbée d'un moteur d'entraînement prévu pour entraîner l'entraînement de courroie (E, L).

3. Procédé selon l'une des revendications précédentes, **caractérisé en ce que** l'on établit, sur la base des contraintes déterminées et en tenant compte des facteurs pertinents, une prévision sur la durée de vie attendue de la courroie (R) ou de la poulie (M, U) à l'aide d'un dispositif d'évaluation (Y).

4. Procédé selon l'une des revendications précédentes, **caractérisé en ce que** le nombre saisi de signaux dans l'étape de travail b) ou les contraintes déterminées dans l'étape de travail c) sont comparés à une valeur cible et lorsque le nombre saisi de signaux ou la contrainte déterminée diffère de la valeur cible respective, une référence à la nécessité d'une intervention de maintenance ou d'un arrêt d'urgence est déclenchée.

5. Procédé selon l'une des revendications précédentes, **caractérisé en ce que** les repères (K1, K2) de la courroie (R) ou de la poulie (M, U) sont porteurs d'informations sur les propriétés de la courroie (R) ou de la poulie (M, U), que les informations respectives sont lues par le dispositif de surveillance (K2) et sont prises en considération lors de la détermination des contraintes.

6. Entraînement par courroie qui comporte
- une poulie montée rotative (M, U),
- une courroie (R) qui est déviée sur la poulie (M, U) et
- un dispositif de surveillance (K2),
et qu'un repère (K1, K2) est respectivement appliqué sur la courroie (R) et sur la poulie (M, U),
**caractérisé en ce que** le dispositif de surveillance (K2) déclenche un signal (X), lorsque les repères (K1, K2) de la poulie (M, U) et de la courroie (R) se trouvent directement face à face sur la poulie (M, U).

7. Entraînement par courroie selon la revendication 6, **caractérisé en ce que** le dispositif de surveillance (K2) est couplé à un compteur qui compte le nombre de signaux (X) déclenchés par le dispositif de surveillance (K2).

8. Entraînement par courroie selon la revendication 7, **caractérisé en ce que** le compteur fait partie d'un dispositif d'évaluation (Y) qui saisit le nombre de signaux (X) déclenchés par le dispositif de surveillance (K2) et détermine, sur la base de cette information et en tenant compte d'autres facteurs pertinents, les contraintes auxquelles la courroie (R) ou la poulie (M, U) ont été exposées pendant leur utilisation antérieure.

9. Entraînement par courroie selon l'une des revendications 6 à 8, **caractérisé en ce que** le repère (K1, K2) de la poulie (M, U) ou de la courroie (R) est un moyen d'identification qui est porteur d'informations sur la courroie (R).

10. Entraînement par courroie selon la revendication 9, **caractérisé en ce que** le repère (K1, K2) est une puce RFID.

11. Entraînement par courroie selon la revendication 8 et l'une des revendications 9 ou 10, **caractérisé en ce que** le dispositif d'évaluation (Y) est couplé à un capteur (K2) pour la lecture des informations portées par le repère (K1).

12. Entraînement par courroie selon l'une des revendications 6 à 11, **caractérisé en ce que** le repère (K1, K2) de la courroie (R) ou de la poulie (M, U) est conçu en tant qu'élément actif, qu'il saisit en fonctionnement une ou plusieurs propriétés de la courroie (R) ou de la poulie (M, U) et les livre au dispositif de surveillance (K2), lorsque la position de déclenchement est atteinte.

13. Entraînement par courroie selon l'une des revendications 9 à 12, **caractérisé en ce que** lorsque la courroie (R) est une courroie dentée ou une courroie synchrone, le moyen d'identification est agencé au-dessus du centre des dents et en dessous du support de traction dans un matériau d'enrobage élastique de la courroie (R) ou sur le côté arrière de la courroie (R), que lorsque la courroie (R) est une courroie trapézoïdale, le moyen d'identification est agencé en dessous du support de traction ou sur le côté arrière de la courroie (R), ou lorsque la courroie (R) est une courroie plate, le moyen d'identification est agencé entre les emplacements de la courroie (R).

14. Entraînement par courroie selon l'une des revendications 6 à 13, **caractérisé en ce que** le dispositif de surveillance (K2) est relié à une installation (W) pour la télétransmission de données.

15. Entraînement par courroie selon l'une des revendications 6 à 14, **caractérisé en ce que** le repère (K1, K2) de la courroie (R) ou de la poulie (M, U) est conçu en même temps en tant que dispositif de surveillance (K2).
